(19) Europäisches Patentamt
European Patent Office
Office européen des brevets

(11) **EP 3 421 189 B1**

(12) **EUROPÄISCHE PATENTSCHRIFT**

(45) Veröffentlichungstag und Bekanntmachung des Hinweises auf die Patenterteilung:
**22.05.2019 Patentblatt 2019/21**

(51) Int Cl.:
**B25J 9/16** *(2006.01)*     **G01S 17/42** *(2006.01)*
**G01S 17/89** *(2006.01)*

(21) Anmeldenummer: **17178332.7**

(22) Anmeldetag: **28.06.2017**

(54) **VERFAHREN ZUM ÜBERWACHEN EINER MASCHINE**

METHOD FOR MONITORING A MACHINE

PROCÉDÉ DE SURVEILLANCE D'UNE MACHINE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**02.01.2019 Patentblatt 2019/01**

(73) Patentinhaber: **Sick AG**
**79183 Waldkirch (DE)**

(72) Erfinder:
• **Hornung, Armin**
  **79110 Freiburg (DE)**
• **Neubauer, Matthias**
  **79102 Freiburg (DE)**

(56) Entgegenhaltungen:
**EP-A1- 2 947 604**

• **FLACCO FABRIZIO ET AL: "A Depth Space Approach for Evaluating Distance to Objects", JOURNAL OF INTELLIGENT AND ROBOTIC SYSTEMS, KLUWER DORDRECHT, NL, Bd. 80, Nr. 1, 24. Oktober 2014 (2014-10-24), Seiten 7-22, XP035913842, ISSN: 0921-0296, DOI: 10.1007/S10846-014-0146-2 [gefunden am 2014-10-24]**
• **ZUBE ANGELIKA: "Combined workspace monitoring and collision avoidance for mobile manipulators", 2015 IEEE 20TH CONFERENCE ON EMERGING TECHNOLOGIES & FACTORY AUTOMATION (ETFA), IEEE, 8. September 2015 (2015-09-08), Seiten 1-8, XP032797449, DOI: 10.1109/ETFA.2015.7301526 [gefunden am 2015-10-19]**
• **MISEIKIS JUSTINAS ET AL: "Multi 3D camera mapping for predictive and reflexive robot manipulator trajectory estimation", 2016 IEEE SYMPOSIUM SERIES ON COMPUTATIONAL INTELLIGENCE (SSCI), IEEE, 6. Dezember 2016 (2016-12-06), Seiten 1-8, XP033066633, DOI: 10.1109/SSCI.2016.7850237 [gefunden am 2017-02-09]**

**Beschreibung**

Die Erfindung betrifft ein Verfahren zum Überwachen einer Maschine nach dem Oberbegriff von Anspruch 1.

Das primäre Ziel der Sicherheitstechnik ist, Personen vor Gefahrenquellen zu schützen, wie sie beispielsweise Maschinen im industriellen Umfeld darstellen. Die Maschine wird mit Hilfe von Sensoren überwacht, und wenn demnach eine Situation vorliegt, in der eine Person gefährlich nahe an die Maschine zu gelangen droht, wird eine geeignete Absicherungsmaßnahme ergriffen. Ein gängiges Absicherungskonzept sieht vor, dass Schutzfelder konfiguriert werden, die während des Betriebs der Maschine vom Bedienpersonal nicht betreten werden dürfen. Erkennt der Sensor einen unzulässigen Schutzfeldeingriff, etwa ein Bein einer Bedienperson, so löst er einen sicherheitsgerichteten Halt der Maschine aus. Es sind auch Alternativen zu Schutzfeldern bekannt, etwa darauf zu achten, dass zwischen Maschine und Person ein von der Relativbewegung abhängiger Mindestabstand eingehalten ist ("speed and separation monitoring").

Für die Überwachung werden unter anderem 3D-Sensoren eingesetzt. Dazu zählen zunächst 3D-Kameras in unterschiedlichen Technologien, beispielsweise Stereoskopie, Triangulation, Lichtlaufzeit, mit Auswertung der Störung passiver zweidimensionaler Muster oder von projizierten Beleuchtungsmustern. Solche 3D-Sensoren nehmen im Gegensatz zu einer üblichen zweidimensionalen Kamera Bilder auf, die in ihren Pixeln einen Abstandswert enthalten. Diese tiefenaufgelösten oder dreidimensionalen Bilddaten werden auch als Tiefenkarte bezeichnet. Weiterhin bekannt sind in zwei oder allen drei Richtungen abtastende Laserscanner, die über die jeweiligen Abtastwinkel und die gemessene Entfernung ebenfalls dreidimensionale Bilddaten erfassen. Der im Vergleich zu einer zweidimensionalen Bilderfassung höhere Geräte- und Auswertungsaufwand zur Erzeugung von dreidimensionalen Bilddaten wird in vielen Anwendungen durch die Zusatzinformationen gerechtfertigt.

In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm IEC61496 oder EN61496 für berührungslos wirkende Schutzeinrichtungen (BWS). Zur Erfüllung dieser Sicherheitsnormen sind eine Reihe von Maßnahmen zu treffen, wie sichere elektronische Auswertung durch redundante, diversitäre Elektronik, Funktionsüberwachung oder speziell Überwachung der Verschmutzung optischer Bauteile. In sicherheitstechnischen Anwendungen wird typischerweise gefordert, dass ein Objekt mit bestimmter Mindestgröße beziehungsweise bestimmten Mindestabmessungen sicher erkannt wird. Diese Eigenschaft wird als Detektionsvermögen bezeichnet.

In der sicherheitstechnischen Überwachung von Robotern besteht ein zunehmender Wunsch nach engerer Zusammenarbeit mit Personen (MRK, Mensch-Roboter-Kollaboration). Relevante Normen in diesem Zusammenhang sind beispielsweise die ISO 10218 für Industrieroboter oder die ISO 15066 für kollaborierende Roboter (ISO 15066). In der MRK sollten Schutzfelder und Sicherheitsabstände möglichst klein und eventuell sogar situationsangepasst konfiguriert werden, natürlich unter der Vorgabe, dass die Sicherheit gewährleistet bleibt. Die Normen ISO13854, ISO 13855, ISO 13857 befassen sich mit der Festlegung von Sicherheitsabständen.

Voraussetzung für solche Sicherheitskonzepte ist aber, dass die relative Lage von Objekten zu Gefahrenquellen erkannt wird. Dazu müssen zum einen die relevanten Objekte erfasst werden. Das ist prinzipiell bekannt. Beispielsweise offenbart die EP 2 819 109 A1 einen 3D-Sensor, der Objekte ab einer Mindestgröße in einem Detektionsfeld erkennt. Um die projektive Geometrie einer Stereokamera korrekt zu berücksichtigen, werden Bereiche der Tiefenkarte mit passend gewählten Schablonen verglichen. Allerdings erfolgt hier die Objekterkennung in direkter Verknüpfung mit Detektionsfeldern. Objekte außerhalb von Detektionsfeldern werden ignoriert. Für ein nicht auf Schutzfeldern basierendes Sicherheitskonzept ist das demnach ungeeignet.

Über die reine Objekterkennung hinaus muss auch bewertet werden, ob sich die Objekte in gefährlicher Nähe zu der überwachten Maschine befinden. Das ist wegen der zusätzlichen Tiefendimension und Abschattungseffekten ein anspruchsvolles Problem.

Die Arbeit von Flacco, Fabrizio, et al. "A depth space approach to human-robot collision avoidance." Robotics and Automation (ICRA), 2012 IEEE International Conference on. IEEE, 2012 berechnet den Abstand zu einem Roboter ausgehend von Tiefenkarten. Dabei wird auch die Verdeckung durch Objekte benannt, allerdings die Verdeckung durch den Roboter selbst nicht berücksichtigt. Außerdem bleibt die Abstandsberechnung ungenau, weil zur Vereinfachung mit Punktstrahlen ohne Ausdehnung gearbeitet wird. Wenn das detektierte Objekt näher an der Kamera ist als der Roboter, wird der Abstand in derselben Tiefenebene und folglich nur zweidimensional berechnet. Damit wird besonders bei großen Öffnungswinkeln und in Bereichen am Bildrand der Abstand überschätzt, und eine sichere Reaktion ist deshalb nicht gewährleistet.

Täubig, Holger, Berthold Bäuml, and Udo Frese. "Real-time swept volume and distance computation for self collision detection." Intelligent Robots and Systems (IROS), 2011 IEEE/RSJ International Conference on. IEEE, 2011 berechnen für Kugelschweif-Geometrien ("sphere-swept volumes") die konvexe Hülle von verschiedenen Teilen eines Roboters in Bewegung. Über den Abstand der Volumina zueinander wird erkannt, ob der Roboter mit sich selbst oder anderen Maschinenteilen kollidieren würde, um dann einen Halt auszulösen. Mit einer Kollisionserkennung oder Abstandsberechnung zu Objekten oder Personen in der Umgebung des Roboters befasst sich diese Arbeit nicht, und außerdem bleibt die projektive Verdeckung in der Kamerageometrie beziehungsweise den damit erfassten Tiefenkarten berücksichtigt. Entsprechendes offenbart die zugehörige WO 2010/085 944 A1.

Lenz, Claus, et al. "Fusing multiple kinects to survey shared human-robot-workspaces." Technische Universität München, Munich, Germany, Tech. Rep. TUM-I1214 (2012) beschreiben ein System zur Sensordatenfusion mehrerer Tiefenkameras. Aus deren Tiefenkarten werden Vordergrundbereiche extrahiert, die Punktwolken fusioniert und schließlich daraus Voxel im Raum berechnet, die zu Objekten geclustert werden. Es werden allerdings nur die sichtbaren Objektoberflächen verarbeitet. Nicht sichtbare Bereiche werden als frei angenommen und nicht weiter berücksichtigt.

Ebenso wird in Miseikis, Justinas, et al. "Multi 3D Camera Mapping for Predictive and Reflexive Robot Manipulator Trajectory Estimation." arXiv preprint arXiv:1610.03646 (2016) eine Kollisionskarte im Voxelraum aus den Daten mehrerer Sensoren gebildet, damit erforderlichenfalls ein Roboter ausweicht. Erneut bleibt die projektive Verdeckung unberücksichtigt.

Aus der EP 2 947 604 A1 ist ein industrielles Sicherheitssystem bekannt, bei dem eine Lichtlaufzeitkamera 3D-Bilddaten aufnimmt. Darin erfasste Objekte werden auf eine XY-Ebene projiziert, und dort wird deren Abstand bestimmt. In einer weiteren Ausführungsform werden Objekt und Roboter jeweils mit einem einfachen 3D-Körper umgeben, etwa einem Ellipsoid, und dann wird der Abstand zwischen den Umhüllenden berechnet.

In der Arbeit von Zube, Angelika, "Combined workspace monitoring and collision avoidance for mobile manipulators", 2015 IEEE 20th Conference on Emerging Technologies & Factory Automation (ETFA) werden die Informationen mehrerer Tiefensensoren fusioniert. Die Robotergeometrie einerseits und die von Hindernissen eingenommenen und verdeckten Bereiche andererseits werden durch Kugeln modelliert, zwischen denen ein Sicherheitsabstand eingehalten werden muss.

Es ist daher Aufgabe der Erfindung, die Überwachung einer Maschine auf Grundlage von 3D-Bilddaten zu verbessern.

Diese Aufgabe wird durch ein Verfahren zum Überwachen einer Maschine nach Anspruch 1 beziehungsweise einen 3D-Sensor nach Anspruch 14 gelöst. Es werden 3D-Bilddaten einer Umgebung der Maschine erfasst. Die Perspektive der Aufnahme wird durch eine Ursprungsposition bezeichnet, die beispielsweise die Position eines überwachenden 3D-Sensors ist. Die 3D-Bilddaten werden ausgewertet, um darin die Positionen von Objekten aufzufinden. Die Objekte haben insbesondere eine Mindestgröße, die einer gewünschten Absicherung entspricht, etwa um 10 mm für Fingerschutz oder im Bereich von 30-80mm für den Schutz von Extremitäten. Die Mindestgröße kann nicht kleiner sein als das Detektionsvermögen, das wiederum von der optischen Auflösung, aber auch dem Auswertungsverfahren zum Auffinden der Objekte in den 3D-Bilddaten abhängt.

Die Erfindung geht nun von dem Grundgedanken aus, zur Bewertung der Gefahr durch oder für die erfassten Objekte den Abstand zwischen Objekten und Maschine zu bestimmen und dabei die projektive Verdeckung einzubeziehen. In der Regel wird der kürzeste Abstand gesucht, weil das die größte Gefahr bedeutet. Das muss aber nicht zwangsläufig so sein, weil andere Faktoren eine Rolle spielen, wie relative Geschwindigkeiten oder beispielsweise die tatsächliche Gefahr durch ein Maschinenteil, wo ein heißes oder spitzes Werkzeug anders behandelt werden kann als ein abgepolsterter, leichter Roboterarm. Das Maschinenteil, zu dem der Abstand bestimmt wird, muss nicht zwingend direkt das gemessene, physische Maschinenteil sein. Es kann sinnvoll sein, es mit einem Puffer zu umgeben, beispielsweise einem größeren auch zukünftigen Aufenthaltsbereich unter Einbeziehung von Bewegungsmöglichkeiten und Reaktionszeit oder garantierte "Safe Zones" eines Roboters.

Beim Aufnehmen von 3D-Bilddaten aus einer Ursprungsposition verdeckt ein erfasstes Objekt den dahinter liegenden Bereich. Der abgeschattete Bereich entspricht der Projektion des Objekts von der Ursprungsposition ausgehend in die Ferne und wird deshalb als projektiver Schatten bezeichnet. Es lässt sich nicht entscheiden, ob sich dort ein weiteres Objekt verbirgt. Deshalb wird erfindungsgemäß der projektive Schatten vorsichtshalber dem erfassten Objekt und/oder dem Maschinenteil zugeschlagen, also so behandelt, als sei auch der projektive Schatten Teil des Objekts. Auf den ersten Blick erscheint erforderlich, den projektiven Schatten sowohl dem Objekt als auch dem Maschinenteil zuzuschlagen. Es ist auch denkbar, dies zu tun. Wie später noch erläutert, genügt es aber auch, den projektiven Schatten nur entweder für das Maschinenteil oder das Objekt zu berücksichtigen.

Die Erfindung hat den Vorteil, dass durch die Berücksichtigung der Verdeckung eine sichere Gefahren- und insbesondere Personenerkennung ermöglicht wird. Das Verfahren berechnet effizient Abstände einschließlich Verdeckung in einem optimierten Ablauf, ermöglicht eine kostengünstige Implementierung auf einer CPU, Embedded-Hardware, einem ASIC (Application-Specific Integrated Circuit) oder FPGA (Field Programmable Gate Array) oder Kombinationen davon und ist einfach zu parallelisieren, da die Berechnungen für verschiedene Paare von Maschinenteilen und Objekten beziehungsweise Teilbereichen davon untereinander unabhängig sind. Die Berechnung ist bis auf unvermeidbare numerische Fehler geometrisch exakt, und es ist sichergestellt, dass der Abstand allenfalls geringfügig unterschätzt, aber niemals überschätzt wird. Damit hat ein Fehler allenfalls geringe Auswirkungen auf die Verfügbarkeit und beeinträchtigt keinesfalls die Sicherheit.

Die Positionen von Maschinenteilen werden bevorzugt in Form mindestens einer die Maschine überdeckenden Kugel bestimmt. Das führt zu einem gewissen Unterschätzen von Abständen, da die Maschinenkontur nicht exakt nachgebildet ist, erleichtert aber die Auswertung ganz erheblich. Mit einer größeren Anzahl von Kugeln auch unterschiedlicher Radien lässt sich die Maschine mit praktisch beliebig kleinen Pufferzonen überdecken. Es ist nicht zwingend erforderlich, die gesamte Maschine durch Kugeln zu repräsentieren, sondern nur die gefährlichen Maschinenteile. Unbewegliche Maschinenteile, baulich unzugängliche Bereiche, ein nur langsam bewegtes, leichtes oder weiches Maschinenteil muss nicht unbedingt abgesichert werden. Die Gewinnung einer geeigneten Kugelrepräsentation ist nicht Gegenstand dieser Erfindung. Sie kann beispielsweise direkt von einer Maschinen- oder Robotersteuerung eingelesen werden, welche die Eigenbewegung der Maschine kennt oder überwacht. Denkbar ist auch, die Maschine in den 3D-Bilddaten zu identifizieren und geeignet mit Kugeln zu überdecken. Falls die Maschinenbewegung reproduzierbar ist, kann die Kugelrepräsentation in einem vorbereitenden Schritt gewonnen werden.

Die Objekte werden bevorzugt als Kugeln mit Mittelpunkt an der Position des Objekts und Radius entsprechend der Mindestgröße modelliert. Falls das Objekt in einer Dimension die Mindestgröße überschreitet, werden dementsprechend mehrere solche Kugeln gebildet. Damit entspricht die objektseitige Repräsentation der bevorzugten Kugelrepräsentation der Maschine und erlaubt eine vereinfachte Auswertung.

Der projektive Schatten wird bevorzugt als Kegel modelliert. Die Spitze des Kegels ist die Position des Objekts beziehungsweise Maschinenteils, und der Kegelmantel entsteht durch projektive Verlängerung von Strahlen, die in der Ursprungsposition beginnen. Sofern Objekt oder Maschinenteil wie bevorzugt durch Kugeln modelliert sind, ist der projektive Schatten ein Kegelstumpf, der oben in Richtung auf die Ursprungsposition durch die Kugel abgeschlossen ist, und der Kegelstumpf ist der exakte zugehörige projektive Schatten.

Für die Abstandsbestimmung wird nur dem Objekt dessen projektiver Schatten zugeschlagen, wenn das Objekt sich näher an der Ursprungsposition befindet als das Maschinenteil, und umgekehrt nur dem Maschinenteil dessen projektiver Schatten zugeschlagen, wenn sich das Maschinenteil näher an der Ursprungsposition befindet. Der projektive Schatten wird demnach innerhalb eines Paares Objekt und Maschinenteil nur für den näheren Partner berücksichtigt. Das ist keine Näherung, sondern eine Verringerung des Aufwands. Der unberücksichtigte Schatten liegt, wie sich aus geometrischen Überlegungen ergibt, stets in einem größeren Abstand.

Für die Abstandsbestimmung wird bevorzugt der jeweils nähere Partner eines Paares aus Maschinenteil und Objekt in Form einer ersten Kugel samt Kegel als projektiver Schatten und der fernere Partner als zweite Kugel modelliert. Dabei bezieht sich näher und ferner auf die Ursprungsposition. Damit vereinfacht sich das Problem auf die Abstandsbestimmung zwischen einfachen geometrischen Körpern. Das Ergebnis bleibt auch richtig, wenn der fernere Partner ebenfalls mit einem Kegel modelliert wird, aber die Abstandsbestimmung wird dadurch nicht genauer und unnötig aufwändig.

Während der Abstandsbestimmung wird bevorzugt zunächst der fernere Partner als Punkt betrachtet und dies später durch Abziehen des Radius' der zweiten Kugel kompensiert. Das erleichtert die Berechnung weiter, die dabei wegen der Kugeleigenschaften exakt bleibt.

Die Abstandbestimmung erfolgt bevorzugt in einer Schnittebene, die durch die Ursprungsposition, den Mittelpunkt der ersten Kugel und den Mittelpunkt der zweiten Kugel festgelegt ist. Die drei Punkte definieren eine eindeutige Ebene, in der immer noch sämtliche relevanten Informationen darstellbar sind. Damit wird die Abstandsbestimmung zu einem nur noch zweidimensionalen und wesentlich besser handhabbaren Problem. Der Mittelpunkt der ersten Kugel und der Mittelpunkt der zweiten Kugel werden vorzugsweise in die Schnittebene projiziert, während die Ursprungsposition ohne Beschränkung der Allgemeinheit zur rechnerischen Vereinfachung auch den Koordinatenursprung bildet.

In der Schnittebene wird vorzugsweise eine Tangente von der Ursprungsposition an eine Projektion der ersten Kugel in die Schnittebene betrachtet. Die Tangente wird betrachtet, die Berechnungen gehen also von der Modellvorstellung einer solchen Tangente aus, eine tatsächliche Berechnung oder gar Darstellung der Tangente ist dagegen nicht erforderlich. Die Projektion der ersten Kugel ergibt einen Kreis. Eigentlich gibt es zwei Tangenten durch die Ursprungsposition an diesen Kreis, die auch beide betrachtet werden können, aber nicht müssen, da wie im nächsten Absatz erläutert immer nur eine Tangente für den gesuchten Abstand in Frage kommt.

Vorzugsweise wird nur die Tangente betrachtet, die näher an dem Mittelpunkt der zweiten Kugel liegt. Das sieht auf den ersten Blick nach einer banalen, aber nicht leicht zu erfüllenden Forderung aus, denn natürlich kann die fernere Tangente nicht den gesuchten kürzesten Abstand liefern, es ist aber a priori nicht bekannt, welche ferner liegt. Tatsächlich sind aber in der gewählten Schnittebene die nähere und fernere Tangente sofort anhand ihres Steigungsverhaltens unterscheidbar, insbesondere hat die nähere Tangente in den konkreten Koordinaten des später erläuterten Ausführungsbeispiels immer eine negative und die fernere Tangente eine positive Steigung.

Vorzugsweise wird anhand des Lots vom Mittelpunkt der zweiten Kugel auf die Tangente unterschieden, ob der kürzeste Abstand zu der ersten Kugel oder zu deren projektivem Schatten vorliegt. Es wird demnach eine Fallunterscheidung vorgenommen, ob die das Objekt beziehungsweise Maschinenteil modellierende Kugel selbst oder deren projektiver Schatten den kürzesten Abstand haben. Das Unterscheidungskriterium ist, ob der Fußpunkt des Lots hinter oder vor dem Berührungspunkt der Tangente mit dem Kreis liegt. Ist nach der Fallunterscheidung die Kugel selbst maßgeblich, so wird der Abstand der Mittelpunkte mit Abziehen der Radien gebildet. Ist es der projektive Schatten, so wird der Abstand zwischen Mittelpunkt der zweiten Kugel und dem schon bekannten Fußpunkt des Lots auf die Tangente herangezogen.

Der Abstand wird bevorzugt für alle Paare von Maschinenteilen und Objekten und der kürzeste Abstand als das Minimum dieser Abstände bestimmt. Die jeweiligen Berechnungen für die unterschiedlichen Paare können nacheinander und/oder parallel durchgeführt werden. Es ist auch möglich, die Paare vorab zu beschränken. Dann wird der Pool aller Paare durch die beschränkten Paare gebildet. Bei bekannter Perspektive der Erfassung der 3D-Bilddaten lässt sich unter Umständen für Objekte sehr schnell und ohne konkrete Berechnungen entscheiden, dass sie samt ihrem projektiven Schatten nicht als Objekte mit kürzestem Abstand zu der Maschine in Frage kommen.

Vorzugsweise wird mindestens eine der folgenden Größen bestimmt: n Paare von Maschinenteilen und Objekten mit kürzestem Abstand, m nächste Objekte zu einem Maschinenteil oder umgekehrt Maschinenteile zu einem Objekt, die 3D-Positionen, zwischen denen die Abstände bestehen, weitere Objektdaten eines Objekts mit kürzestem Abstand, insbesondere dessen Position, Geschwindigkeit und/oder Kontur. Damit kann eine komplexere Bewertung der Umgebung der Maschine erfolgen als allein durch den kürzesten Abstand. Es handelt sich jeweils um Zwischengrößen oder sehr leicht ableitbare Größen, die den Aufwand nicht wesentlich erhöhen.

Vorzugsweise erfolgt eine Absicherung der Maschine, wenn ein ermittelter Abstand einen Sicherheitsabstand unterschreitet. Beispiele für eine Absicherung sind ein Nothalt, ein Abbremsen, ein Ausweichen oder ein Verbringen in eine sichere Position. Es ist denkbar, einen festen Mindestabstand vorzugeben, der etwa unter worst-case-Annahmen an Geschwindigkeiten oder aus bekannten oder vermessenen Nachlaufwegen bestimmt ist. Es sind auch dynamische Sicherheitsabstände unter anderem in Abhängigkeit von der aktuellen Geschwindigkeit der Maschine und des Objekt denkbar. Solche Daten lassen sich von der Maschinensteuerung oder Bildauswertungen mit Objektverfolgung und auch über weitere Sensoren gewinnen.

Die 3D-Bilddaten werden bevorzugt aus mindestens zwei Ursprungspositionen bestimmt, wobei in überlappenden Bereichen Abstände mit den unterschiedlichen projektiven Schatten zunächst separat bestimmt und anschließend ein gemeinsamer kürzester Abstand gefunden wird. Zwar berücksichtigt die Erfindung die Verdeckung in sicherer und angemessener Weise, kann aber die Überwachungsbeschränkung durch Verdeckung nicht an sich aufheben. Bei Aufnahme aus mehreren Perspektiven verschwinden nach gemeinsamer Auswertung die projektiven Schatten oder werden jedenfalls deutlich kleiner. Um diese gemeinsame Auswertung besonders einfach zu halten, werden die Abstände zunächst in den 3D-Bilddaten aus unterschiedlichen Ursprungspositionen separat bestimmt, und erst anschließend werden die kürzesten Abstände gesucht. Auf diese Weise bleibt die Auswertung entkoppelt, parallelisierbar und gut handhabbar. Prinzipiell könnte man 3D-Bilddaten auch früher in der Verarbeitungskette fusionieren und dadurch die projektive Schatten direkt eliminieren oder verkleinern. Das ist aber ungleich komplexer und nicht einfach ein Fortschreiben des erfindungsgemäßen Verfahrens auf mehrere 3D-Bildaufnahmen aus unterschiedlicher Perspektive.

Ein erfindungsgemäßer 3D-Sensor zur Überwachung einer Maschine weist einen Sensorkopf zur Erfassung von 3D-Bilddaten einer Umgebung der Maschine sowie eine Auswertungseinheit auf, die dafür ausgebildet ist, die 3D-Bilddaten mit einem erfindungsgemäßen Verfahren auszuwerten und so einen Abstand zwischen der Maschine und Objekten in der Umgebung der Maschine zu ermitteln. Als 3D-Sensor kommen unter anderem 3D-Kameras und 3D-Scanner in Betracht. Eine 3D-Kamera kann jede bekannte Technik verwenden, wie ein Triangulationsprinzip, bei dem zwei Kamerabilder einer bewegten oder Stereokamera untereinander oder ein Kamerabild und ein bekanntes Projektionsmuster korreliert und Disparitäten geschätzt werden, oder ein Lichtlaufzeitprinzip mit direkter Laufzeitmessung von Lichtsignalen oder Phasenmessung.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:

Fig. 1 eine schematische dreidimensionale Darstellung einer 3D-Kamera und ihres Überwachungsbereich;

Fig. 2 eine schematische Darstellung des Überwachungsbereichs mit als Kugel modellierten Maschinenteilen und Objekten sowie deren projektiven Schatten;

Fig. 3 ein beispielhaftes Ablaufdiagramm zur Bewertung der Positionen von Objekten zu Maschinenteilen;

Fig. 4 ein beispielhaftes Ablaufdiagramm zur Bestimmung des Abstands zwischen einem Objekt und einem Maschinenteil unter Berücksichtigung von projektiven Schatten;

Fig. 5 eine erläuternde Skizze einer Schnittebene zur Berechnung des Abstands; und

Fig. 6 eine weitere erläuternde Skizze zur Berechnung des Abstands innerhalb der Schnittebene.

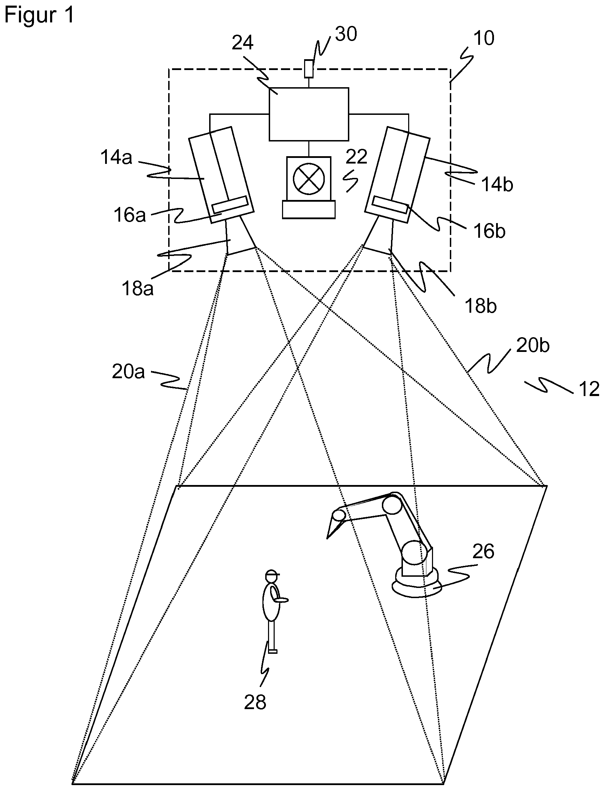

Figur 1 zeigt in einer schematischen dreidimensionalen Darstellung den allgemeinen Aufbau einer Stereokamera 10 zur Aufnahme einer Tiefenkarte. Die Stereokamera 10 ist nur ein Beispiel, an dem die Erfassung von 3D-Bilddaten erläutert wird. Ebenso denkbar wären unter anderem die einleitend genannten anderen 3D-Kameras mit Bestimmung der Lichtlaufzeit oder einer Auswertung der Störung passiver zweidimensionaler Muster oder von projizierten Beleuchtungsmustern sowie Laserscanner.

Zur Erfassung eines Raumbereichs 12 sind zwei Kameramodule 14a, 14b in einem bekannten festen Abstand zueinander montiert und nehmen jeweils Bilder des Raumbereichs 12 auf. In jeder Kamera ist ein Bildsensor 16a, 16b vorgesehen, üblicherweise ein matrixförmiger Aufnahmechip, der ein rechteckiges Pixelbild aufnimmt, beispielsweise ein CCD- oder ein CMOS-Sensor. Die beiden Bildsensoren 16a, 16b bilden gemeinsam einen 3D-Bildsensor zur Erfassung einer Tiefenkarte. Den Bildsensoren 16a, 16b ist je ein Objektiv 18a, 18b mit einer abbildenden Optik zugeordnet, welche in der Praxis als jedes bekannte Abbildungsobjektiv realisiert sein können. Der maximale Sichtwinkel dieser Optiken ist in Figur 1 durch gestrichelte Linien dargestellt, die jeweils eine Sichtpyramide 20a, 20b bilden.

Zwischen den beiden Bildsensoren 16a, 16b ist eine Beleuchtungseinheit 22 vorgesehen, um den Raumbereich 12 mit einem strukturierten Muster auszuleuchten. Die dargestellte Stereokamera ist demnach für aktive Stereoskopie ausgebildet, bei der das Muster auch einer an sich strukturlosen Szenerie überall auswertbare Kontraste aufprägt. Alternativ ist keine oder eine homogene Beleuchtung vorgesehen, um die natürlichen Objektstrukturen im Raumbereich 12 auszuwerten, was aber regelmäßig zu zusätzlichen Bildfehlern führt.

Mit den beiden Bildsensoren 16a, 16b und der Beleuchtungseinheit 22 ist eine Steuer- und Auswertungseinheit 24 verbunden. Die Steuer- und Auswertungseinheit 24 kann in verschiedenster Hardware implementiert sein, beispielsweise digitalen Bausteinen wie Mikroprozessoren, ASICs (Application Specific Integrated Circuit), FPGAs (Field Programmable Gate Array), GPUs (Graphics Processing Unit) oder Mischformen davon, die beliebig auf interne und externe Komponenten verteilbar sind, wobei externe Komponenten auch über Netzwerk oder eine Cloud eingebunden sein können, soweit Latenzen beherrscht oder toleriert werden können. Da das Erzeugen der Tiefenkarte und deren Auswertung sehr rechenintensiv sind, wird vorzugsweise eine zumindest teilweise parallele Architektur gebildet.

Die Steuer- und Auswertungseinheit 24 erzeugt mit Hilfe der Beleuchtungseinheit 22 das strukturierte Beleuchtungsmuster und empfängt Bilddaten der Bildsensoren 16a, 16b. Aus diesen Bilddaten berechnet sie mit Hilfe einer stereoskopischen Disparitätsschätzung die 3D-Bilddaten beziehungsweise die Tiefenkarte des Raumbereichs 12. Der gesamte erfassbare Raumbereich 12 oder auch Arbeitsbereich kann über eine Konfiguration eingeschränkt werden, beispielsweise um störende oder nicht notwendige Bereiche auszublenden.

Eine wichtige sicherheitstechnische Anwendung der Stereokamera 10 ist die Überwachung einer Maschine 26, die in der Figur 1 durch einen Roboter symbolisiert ist. Die Maschine 26 kann auch wesentlich komplexer sein als gezeigt, aus vielen Teilen bestehen oder sogar eigentlich eine Anordnung mehrerer Maschinen sein, etwa mehrerer Roboter oder Roboterarme. Die Steuer- und Auswertungseinheit 24 prüft, ob sich ein Objekt 28, dargestellt als Person, in Bezug auf die Maschine 26 in einer gefährlichen Position befindet, wobei dies von weiteren Bedingungen wie den Geschwindigkeiten oder der Beschaffenheit von Objekt und Maschinenbereich der drohenden Kollision abhängen kann. Im Gefährdungsfall wird ein sicherheitsgerichtetes Absicherungssignal über einen Ausgang 30 (OSSD, Output Signal Switching Device) ausgegeben, um beispielsweise die Maschine 26 anzuhalten, abzubremsen oder ausweichen zu lassen. Alternativ oder zusätzlich können ein Steuerungssignal an die Maschine 26 oder Messergebnisse wie ein kleinster Abstand eines Objekt zu der Maschine 26 ausgegeben werden, entweder direkt an die Maschine 26 oder an eine Zwischenstation wie eine sichere Steuerung. Die Stereokamera 10 ist vorzugsweise fehlersicher im Sinne von Sicherheitsnormen wie den einleitend genannten ausgelegt.

Nachfolgend wird nun im Detail erläutert, wie mit der Steuer- und Auswertungseinheit 24 eine Position- und Abstandsüberwachung ermöglicht wird, beispielsweise für eine Mensch-Roboter-Kollaboration unter Berücksichtigung von DIN EN ISO 10218 beziehungsweise ISO/TS 15066. Ausgangspunkt sind die Positionen der Maschinenteile der Maschine 26, jedenfalls soweit diese sicherheitsrelevant sind, gegebenenfalls anhand von Reaktions- und Anhaltezeit oder anderen Kriterien erweitert auf ein gefahrbringendes Volumen, sowie die von der Stereokamera 10 erfassten Objekte 28. Letzteres liegt beispielsweise in Form einer 2D-Detektionskarte vor, deren Pixel an Positionen, in denen ein Objekt 28 einer Mindestgröße erfasst wurde, der dazu gemessene Entfernungswert eingetragen ist, und die sonst leer bleibt. Mit Hilfe dieser Objektdetektionen, die natürlich auch anders repräsentiert sein können, werden der jeweilige und insbesondere der kürzeste Abstand zu der Maschine 26 berechnet, die eine dynamische Gefahrenstelle bildet. Abhängig von dem Abstand erfolgt dann gegebenenfalls eine Absicherung, die wie mehrfach erwähnt auch in einem Ausweichen oder Verlangsamen bestehen kann.

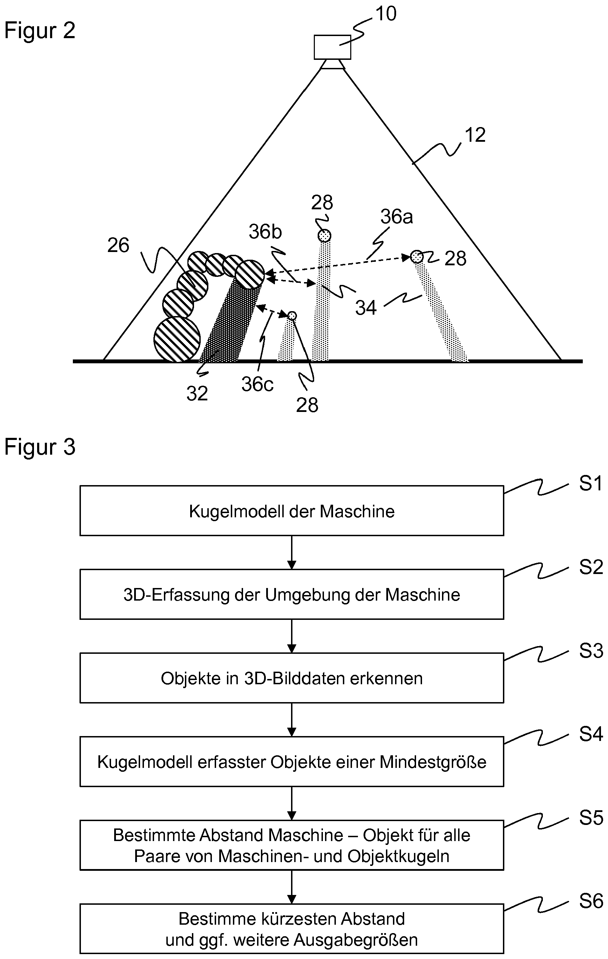

Figur 2 zeigt eine schematische Seitenansicht des von der Stereokamera 10 überwachten Raumbereichs 12. Figur 3 zeigt ein beispielhaftes Ablaufschema zur Bewertung der Position von Objekten 28 zu der überwachenden Maschine 26 in groben Schritten. Dies erfolgt vorzugsweise in jedem Frame der 3D-Bilddatenerfassung oder jedenfalls mit einer Frequenz, die eine geforderte sicherheitsgerichtete Reaktionszeit gewährleistet.

In einem Schritt S1 wird die Maschine 26 für die weitere Auswertung zur vereinfachten Handhabung durch umhüllende Kugeln repräsentiert. Diese Kugeln überdecken die Maschine 26 oder zumindest diejenigen Maschinenteile, die eine zu überwachende Gefahrenquelle bilden beziehungsweise das daraus abgeleitete gefahrbringende Volumen. Dabei muss für die Anzahl von Kugeln eine Abwägung zwischen Aufwand für die Überwachung und Genauigkeit der Approximation gefunden werden. In einigen Ausführungsformen wird die Kugel-Repräsentation der Steuer- und Auswertungseinheit 24 über eine Schnittstelle zugeführt, beispielsweise von anderen Sensoren oder einer Steuerung der Maschine 26, die deren Eigenbewegung kennt beziehungsweise überwacht. Vorzugsweise wird der von der Maschine 26 eingenommene Raum einschließlich seiner Projektion auf die Bildebene der Stereokamera 10 ausmaskiert und nicht betrachtet, um zu vermeiden, dass die Maschine 26 selbst als Objekt 28 erkannt wird.

In einem Schritt S2 wird nun von der Stereokamera 10 der Raumbereich 12 aufgenommen, um 3D-Bilddaten zu gewinnen. In manchen Ausführungsformen wird die Maschine 26 in den 3D-Bilddaten erkannt und daraus eine Kugelrepräsentation abgeleitet, sofern diese Daten nicht anderweitig verfügbar gemacht werden. Dann ist die Abfolge der Schritte S1 und S2 vorzugsweise umgekehrt.

In einem Schritt S3 werden Objekte 28 der Mindestgröße in den 3D-Bilddaten erfasst. Sie sind dann mit ihrer 3D-Position bekannt, beispielsweise in Form einer Detektionskarte wie oben beschrieben.

Die Objekte 28 beziehungsweise deren aus Sicht der Stereokamera 10 sichtbare Oberflächen werden in einem Schritt S4 ebenfalls als Kugel modelliert. Beispielsweise wird jede Position in der Detektionskarte, an der ein Entfernungswert eingetragen und demnach dort ein Objekt 28 der Mindestgröße erfasst ist, mit einer Kugel mit Radius entsprechend der Mindestgröße umhüllt. Für Objekte 28, die größer sind als eine solche Kugel, sind in der Detektionskarte mehrere benachbarte Pixel mit einem Entfernungswert besetzt, so dass dort ineinander geschachtelte Kugeln entstehen, die letztlich das Objekt insgesamt umhüllen. Es ist möglich, in einem Zwischenschritt diejenigen Kugeln zu eliminieren, die von anderen Kugeln überdeckt sind und somit nicht ausgewertet werden müssen.

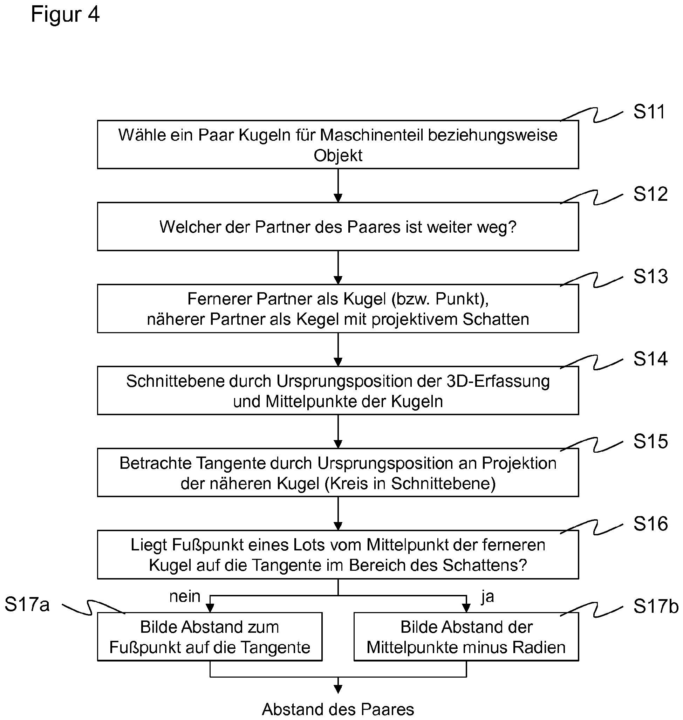

Die Stereokamera 10 berechnet dann in einem Schritt S5, der noch unter Bezugnahme auf die Figuren 4 bis 6 genauer erläutert wird, die Abstände zwischen Maschine 26 und Objekten 28, insbesondere den kürzesten Abstand, um dies für eine sicherheitsgerichtete Reaktion der Maschine 26 verwenden zu können. Folglich müssen Abstände zwischen den Maschine 26 und Objekte 28 repräsentierenden Kugeln berechnet werden.

Wegen der projektiven Verdeckung aus Sicht der Stereokamera 10 genügt dies aber für eine sichere Auswertung noch nicht. Im Schatten 32 der Maschine 26 beziehungsweise dem dafür ausmaskierten Bereich ebenso wie im Schatten 34 der Objekte kann sich ein weiteres Objekt verbergen, das für die Stereokamera 10 nicht erfassbar ist. Sicherheitshalber wird der jeweilige Schatten 32, 34 wie ein Objekt 28 beziehungsweise Teil der Maschine 26 behandelt. Der projektive Schatten, also der aus Sicht der Stereokamera 10 verdeckte Bereich, ist für eine Kugel ein Kegelstumpf, der von Strahlen gebildet wird, die von der Stereokamera 10 ausgehen.

Somit werden aus der Maschine 26 und den Objekten 28 Kugeln mit Übergang in einen Kegelstumpf. Für den kürzesten Abstand ergeben sich dann abhängig von der Lage der Objekte 28 zu der Maschine 26 unterschiedliche Bezugspunkte, beispielsweise ein Abstand 36a zwischen Maschine 26 und Objekt 28, ein Abstand 36b zwischen Maschine 26 und Schatten 34 eines Objekts 28 und ein Abstand 36c zwischen Schatten 32 der Maschine 26 und Objekt 28, und auch ein nicht eingezeichneter Abstand zwischen den Schatten 32, 34 wäre denkbar.

In einem Schritt S6 werden die für alle Paare berechneten Abstände gemeinsam ausgewertet, insbesondere der kürzeste Abstand als das Minimum bestimmt. Die Paare können auch vorab eingeschränkt werden. Ersichtlich kann das Objekt 28 ganz rechts in Figur 2 nicht den kürzesten Abstand zu der Maschine 26 haben. Es ist möglich, entsprechende Heuristiken oder Verfahren vorzuschalten, um die Anzahl der Paare und damit den Aufwand zu beschränken.

Eine mögliche und in vielen Fällen besonders wichtige Ausgabegröße ist der kürzeste Abstand, denn eine typische Sicherheitsbetrachtung fordert, dass stets ein gewisser Abstand zwischen Maschine 26 und Objekten 28 eingehalten ist. Es kann aber auch andere beziehungsweise weitere Ausgabegrößen geben. Beispielsweise werden die n kürzesten Abstände zu der Maschine 26 berechnet und ausgegeben, um mehrere Objekte 28 oder Objektbereiche auszuwerten. Ähnlich ist es möglich, kürzeste Abstände zu mehreren Teilbereichen der Maschine 26 oder mehreren Maschinen parallel zu berechnen und auszugeben. Durch die Kugelrepräsentation besteht zwischen einer einzelnen Maschine 26 und mehreren Maschinen oder Gefahrenstellen kein prinzipieller Unterschied. Es ist aber denkbar, dass unterschiedliche Maschinenbereiche unterschiedlich behandelt werden, etwa wegen eines Gefährdungsgrades. Zu einem Abstand können auch die Koordinaten ausgegeben werden, also die betroffenen Bereiche der Maschine 26 oder Objekte 28 samt approximierter oder in den 3D-Bilddaten erfasster Geometrie, die Berührungspunkte der Abstandslinie oder die Abstandslinie selbst. Auch die Geschwindigkeiten der beteiligten Bereiche der Maschine 26 und Objekte 28 sind zumindest aus mehreren Frames der 3D-Erfassung etwa durch Objekttracking ermittelbar. Je nach sich anschließender Sicherheitsbetrachtung können solche Größen relevant und in beliebiger Kombination berechnet und ausgegeben werden.

Figur 4 zeigt ein beispielhaftes Ablaufdiagramm mit effizienten Einzelberechnungsschritten für die Berechnung des Abstands für ein Paar von Kugeln mit jeweiligem Kegelstumpf. Das kann folglich als konkrete Ausgestaltungsmöglichkeit von Schritt S5 des in Figur 3 gezeigten Ablaufdiagramms verstanden werden.

In einem Schritt S11 wird ein Paar von Kugeln für die Maschine 26 und ein Objekt 28 ausgewählt, deren Abstand unter Berücksichtigung des projektiven Schattens 32, 34 zu berechnen ist. Die komplette Berechnung bleibt geometrisch korrekt, es findet abgesehen von unvermeidlichen numerischen Ungenauigkeiten keine Approximation statt.

Die jeweiligen umhüllenden Kugeln sind mit Hilfe einer Kalibrierung der 3D-Kamera in passende Weltkoordinaten umgerechnet, hier kartesische Koordinaten. Die Kugeln sind mit einem Kegelstumpf verbunden, um den projektiven Schatten zu berücksichtigen. Das sind folglich die Eingangsgrößen einer einzelnen Abstandsbestimmung: Zwei als Zuckerhut zu veranschaulichende geometrische Körper, die aus einem Kugelsegment mit einem sich anschließenden Kegel oder Kegelstumpf bestehen und die geometrisch durch Mittelpunkt und Radius vollständig beschrieben sind, unter Hinzunahme der Position der Stereokamera 10 und der Tatsache, dass die projektiven Schatten 32, 34 in der Ferne prinzipiell ins Unendliche und praktisch bis in die maximale Reichweite der Stereokamera 10 reichen.

In einem Schritt S12 erfolgt eine Vereinfachung für die weitere Berechnung. Es wird geprüft, welcher der beiden Partner des Paares, bezogen auf den jeweiligen Mittelpunkt, weiter von der Stereokamera 10 entfernt ist. Der Mittelpunkt des näheren Partners wird mit $m$ bezeichnet, der Mittelpunkt der ferneren Partners mit $p$. Man beachte, dass $m,p$ durch diese Festlegungen nicht mehr erkennen lassen, ob sich dort die Maschine 26 oder das Objekt 28 befindet, das geometrische Abstandsproblem ist davon unabhängig.

Nun wird in einem Schritt S13 bei dem ferneren $p$ der Kegel weggelassen. Das ist ausreichend, weil die projektive Schatten 32, 34 repräsentierenden Kegel jeweils aus Sicht der Stereokamera 10 in Projektion entstehen und die Entfernungen so von der Stereokamera 10 weg immer größer werden. Es ist also mit anderen Worten unmöglich, dass der kürzeste Abstand zu dem ferneren Schatten 32, 34 besteht. Außerdem genügt es, $p$ in der weiteren Berechnung als Punkt zu betrachten. Die Kugel kann nämlich am Ende sehr einfach durch Abziehen ihres Radius' von dem berechneten Abstand berücksichtigt werden. Bei dem näheren $m$ dagegen bleibt es bei einer Kugel, die mit einem Kegelstumpf verbunden ist.

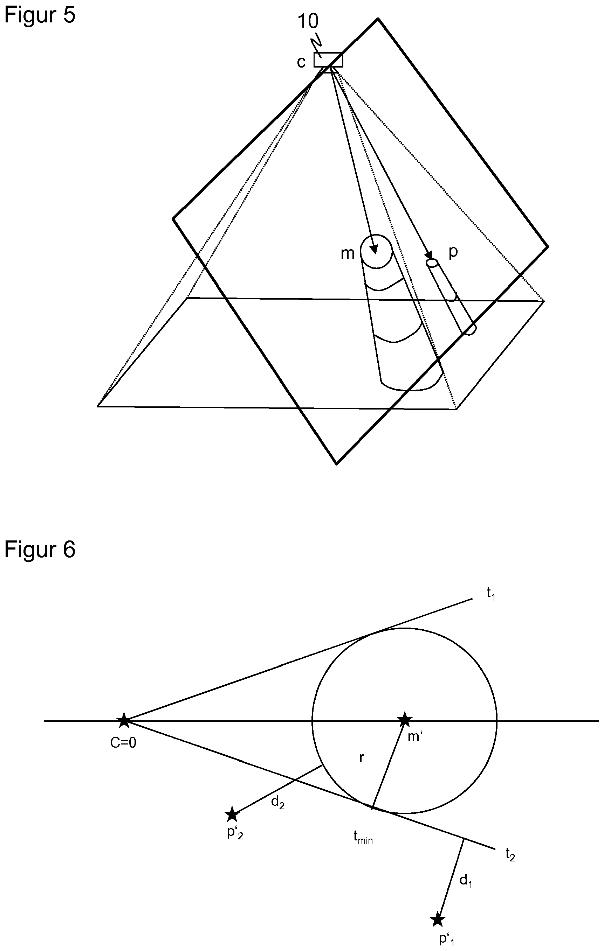

In einem Schritt S14 wird nun das dreidimensionale Problem auf ein zweidimensionales Problem projiziert. Figur 5 illustriert, wie dazu eine Schnittebene durch die drei Punkte c, m, p gelegt wird. Dabei ist c die Position der Stereokamera 10, die ohne Beschränkung der Allgemeinheit in den Koordinatenursprung gelegt wird, c = $(0,0,0)^T$.

Diese Schnittebene soll nun erfasst werden. Da sie durch den Ursprung $c$ geht, ist mit der Ebenen-Normale n = m × p die Ebenengleichung $n_1x + n_2y + n_3z = 0$. In der Schnittebene wird ein Koordinatensystem aus zwei Normalenvektoren $e_1$, $e_2$ bestimmt. Dabei ist für die weitere Berechnung die folgende Aufteilung vorteilhaft:

$$e_1 = \frac{m}{\|m\|},$$

$$e_2 = \frac{\varepsilon}{\|\varepsilon\|},$$

$$\varepsilon = m \times n = m \times (m \times p) = m\,(m \cdot p) - p\,\|m\|^2.$$

Die beiden Normalenvektoren $e_1$, $e_2$ spannen also ein kartesisches Koordinatensystem innerhalb der Schnittebene auf, mit $e_1$ in Richtung $m$ und $e_2$ senkrecht dazu.

Aus den beiden Vektoren lässt sich dann eine 2x3 Projektionsmatrix bilden, die $m, p$ in die 2D-Schnittebene projiziert: m' = $(m, 0)^T$, c' = $(0,0)^T$ sowie $p'$ aus der Projektion mit der Projektionsmatrix $E$: $p' = Ep$ mit $E = \begin{pmatrix} e_1^T \\ e_2^T \end{pmatrix}$ bzw:

$= e_1\, p$ und $p'_y = e_2\, p$.

Figur 6 illustriert die Situation in der Schnittebene. Die Kugel um $m$ wird zu einem Kreis um $m'$ mit Radius $r$, und der Verdeckungskegel wird durch die Tangenten $t_1$, $t_2$ an diesen Kreis durch den Ursprung $c$ festgelegt, welche die Kegelflächen in der Schnittebene repräsentieren.

In einem Schritt S15 werden diese Tangenten betrachtet. Die Tangentengleichungen in Steigungsform sind

$$t_{1,2}: y = s_{1,2}\, x \implies s_1 = \frac{y}{x} = \tan \alpha \quad \text{(Wg. Symmetrie: } s_2 = -s_1)$$

$$\text{mit } \alpha = \sin\left(\frac{r}{m}\right) \implies s_1 = \tan\left(\operatorname{asin}\left(\frac{r}{m}\right)\right) = \frac{r/m}{\sqrt{1 - r^2/m^2}}.$$

Sei noch $\gamma := \frac{m}{r}$ das Verhältnis von Kameraabstand zu Radius r, $\gamma \geq 1$.

Dann ist die Steigung der Tangenten $s_{1,2} = \pm \frac{1}{\sqrt{\gamma^2 - 1}}$ und damit die Tangentengleichung $t_{1,2}$:

$$y = \pm \frac{1}{\sqrt{\gamma^2 - 1}}\, x.$$

Konkret benötigt wird der nächste Punkt auf der Tangente zum Punkt **p** beziehungsweise seine Parametrierung entlang der Tangente. In Figur 6 sind zwei verschiedene Punkte $\boldsymbol{p'_1}$, $\boldsymbol{p'_2}$ gezeigt, die unterschiedlichen möglichen Lagen von **p** entsprechen.

Aus der Punkt-Steigungsform der Tangentengleichung lässt sich einfach die Hesse-Normalform ableiten, mit welcher direkt der Abstand eines Punktes **p'** zu den Geraden berechnet werden kann. Allerdings wird hier auch der nächste Punkt auf der Geraden zu $\boldsymbol{p'} = (p_x, p_y)^T$ benötigt ("Lotfußpunkt"), dazu ist die Vektorform praktikabler.

Aus der Tangentengleichung folgt $\pm x = \sqrt{\gamma^2 - 1} \; y$ und damit für die Tangenten der jeweilige Richtungsvektor $\boldsymbol{a}_{1,2} = \begin{pmatrix} \sqrt{\gamma^2 - 1} \\ \pm 1 \end{pmatrix}$.

Die Tangentengleichung in Vektorform beschreibt einen beliebigen Punkt auf der Geraden über den freien Parameter t, insbesondere auch zwei potentielle Lotfußpunkte $\boldsymbol{l}_{1,2} : \begin{pmatrix} x \\ y \end{pmatrix} = t \begin{pmatrix} \sqrt{\gamma^2 - 1} \\ \pm 1 \end{pmatrix}$.

Die Vektoren $\boldsymbol{b}_{1,2} := p' \rightarrow l_{1,2}$ sind der Verbindungsvektor von p' zum Lotfußpunkt jeder Tangente:

$$\boldsymbol{b}_{1,2} = \begin{pmatrix} \sqrt{\gamma^2 - 1} \cdot t \\ \pm t \end{pmatrix} - \boldsymbol{p'}.$$

Das Lot muss senkrecht auf den Richtungsvektor stehen, d.h. $\boldsymbol{a}_i \cdot \boldsymbol{b}_i = 0$ für i=1,2.

Daraus ergeben sich die folgenden Lösungen für t: $t_{1,2} = \frac{p_x \sqrt{\gamma^2 - 1} \pm p_y}{\gamma^2}$.

Nun liegt durch das mit $\boldsymbol{e}_1$, $\boldsymbol{e}_2$ aufgespannte Koordinatensystem **p'** immer im negativen y / positiven x-Quadranten, was sich aus der Reihenfolge der Vektoren im Kreuzprodukt ergibt. Das bedeutet aber, dass immer die absteigende Tangente $t_2$ die nähere ist Die Tangente $t_1$ wird vorzugsweise nicht betrachtet, was die Berechnung im Betrieb erleichtert.

Durch die Filterung von Tiefenwerten in der Vorverarbeitung liegt zudem kein Objekt 28 in der Maschine 26 oder deren Schatten, entsprechende Detektionen wurden ausmaskiert. Daher kann ausgeschlossen werden, dass sich **p** im Kegel befindet. Außerdem sind alle Größen auf den Bereich gültiger Tiefenwerte begrenzt, liegen also im überwachten Raumbereich 12.

Nach der Berechnung von $t = \frac{r^2}{m^2} \left( p_x \sqrt{\frac{m^2}{r^2} - 1} - p_y \right)$ werden die Werte mit den minimal zulässigen Werten verglichen. Diese legen den gültigen Bereich des Kegelmantels fest.

Der minimale Wert $t_{min}$ für die Tangente ergibt sich durch Einsetzen des Kreismittelpunktes in

$$\boldsymbol{p'} = \begin{pmatrix} m \\ 0 \end{pmatrix}: \quad t_{min} = \frac{r^2}{m} \sqrt{\frac{m^2}{r^2} - 1} \; .$$

In einem Schritt S16 wird nun eine Fallunterscheidung vorgenommen. Je nachdem, welcher der dargestellten Punkte $\boldsymbol{p'_1}$, $\boldsymbol{p'_2}$ der Lage von *p* entspricht, besteht der kürzeste Abstand zu der Tangente oder zu dem Kreis. Anschaulich entspricht die Tangente dem Schatten 32, 34 und der Kreis der Maschine 26 oder dem Objekt 28 selbst.

Für einen Punkt in einer Lage wie $\boldsymbol{p'_1}$ ist $t > t_{min}$, und dann wird in einem Schritt S17a der Lotfußpunkt *l* aus der Tangentengleichung berechnet. Der Abstand ergibt sich aus $d = ||l - p'||$. Dies wird über die Ebenenvektoren zurück in 3D-Koordinaten transformiert, $l_{3D} = \boldsymbol{E^T} l$ mit $\boldsymbol{E^T} = (e_1 \; e_2)$ bzw. $l_{3D} = l_x e_1 + l_y e_2$, wobei $l_x$, $l_y$ die Koordinaten des nächsten Tangentenpunktes sind. Für den tatsächlichen Abstand muss noch der Radius der Kugel um **p** abgezogen werden, um die Reduktion der dortigen Kugel auf einen Punkt zu kompensieren.

Ist umgekehrt $t \leq t_{min}$ für einen Punkt in einer Lage wie $\boldsymbol{p'_2}$, so wird statt der Tangente in einem Schritt S17b direkt der Kreis herangezogen. Der Abstand entspricht dann einfach dem Abstand der Mittelpunkte **m**, **p** in diesem Fall nach Abzug der Radien beider Kugeln.

Damit ist der Abstand des Paares unter Berücksichtigung der projektiven Schatten in exakter geometrischer Berechnung bekannt.

In vielen Fällen ist die Bewegung der Maschine 26 nicht vollständig frei und dynamisch, sondern zur Einrichtzeit weitestgehend bekannt. Dann muss die Steuer- und Auswertungseinheit 24 der Sensor nicht zur Laufzeit den Abstand neu betrachten, sondern kann für eine Reihe von bekannten Konfigurationen die Abstände zu vielen oder allen möglichen Positionen im Raumbereich 12 etwa in diskretisierter Form von 2D-Pixeladressen und Tiefenwert vorausberechnen. So entsteht in einer Konfigurationsphase eine Look-Up-Table, die eine sehr schnelle Auswertung zur Laufzeit erlaubt.

In einer weiteren Ausführungsform wird die Maschine 26 nicht mit ihrem Verdeckungskegel berücksichtigt, beispielsweise weil das Sicherheitskonzept das nicht erfordert. Die Maschine 26 wird dann als frei schwebende Kugel berücksichtigt, und das Objekt 28 als Kugel mit Verdeckungskegel. Sind dann noch alle Kugeln gleich groß, kann effizienter mit dem quadrierten Abstand gerechnet werden, und das aufwändige Ziehen von Wurzeln entfällt.

Eine weitere Ausführungsform sieht nicht nur eine Stereokamera 10 vor, sondern einen Verbund von mehreren Stereokameras 10. Es wird daran erinnert, dass die Stereokamera 10 nur ein beispielhafter Sensor ist, und ein solcher Verbund kann auch inhomogen sein, d.h. unterschiedliche Sensortypen aufweisen. Jeder Sensor ermittelt den für ihn kürzesten Abstand mit der für ihn geltenden projektiven Verdeckung. Die Abstände werden kombiniert ausgewertet, indem beispielsweise der kürzeste Abstand aus dem Verbund zur sicherheitsgerichteten Auswertung verwendet wird.

**Patentansprüche**

1.  Verfahren zum Überwachen einer Maschine (26), bei dem die Positionen von Maschinenteilen erfasst, aus einer Ursprungsposition 3D-Bilddaten einer Umgebung (12) der Maschine (26) aufgenommen und aus den 3D-Bilddaten die Positionen von Objekten (28) bestimmt werden, wobei ein Abstand zwischen Maschine (26) und Objekten (28) in der Umgebung (12) der Maschine (26) ermittelt wird, indem der Abstand zwischen Paaren jeweils einer Position eines Maschinenteils und einer Position eines Objekts (28) berechnet wird, und dass dem Maschinenteil und/oder dem Objekt (28) für die Abstandsbestimmung deren projektiver Schatten (32, 34) zugeschlagen wird,
    **dadurch gekennzeichnet,**
    **dass** für die Abstandsbestimmung nur dem Objekt (28) dessen projektiver Schatten (34) zugeschlagen wird, wenn das Objekt (28) sich näher an der Ursprungsposition befindet als das Maschinenteil, und umgekehrt nur dem Maschinenteil dessen projektiver Schatten (32) zugeschlagen wird, wenn sich das Maschinenteil näher an der Ursprungsposition befindet.

2.  Verfahren nach Anspruch 1,
    wobei die Positionen von Maschinenteilen in Form mindestens einer die Maschine (26) überdeckenden Kugel bestimmt werden und/oder wobei die Objekte (28) als Kugeln mit Mittelpunkt an der Position des Objekts (28) und Radius entsprechend einer Mindestgröße modelliert werden.

3.  Verfahren nach Anspruch 1 oder 2,
    wobei der projektive Schatten (32, 34) als Kegel modelliert wird.

4.  Verfahren nach einem der vorhergehenden Ansprüche,
    wobei für die Abstandsbestimmung der jeweils nähere Partner eines Paares aus Maschinenteil und Objekt (28) in Form einer ersten Kugel samt Kegel als projektiver Schatten (32, 34) und der fernere Partner als zweite Kugel modelliert wird.

5.  Verfahren nach Anspruch 4,
    wobei während der Abstandsbestimmung zunächst der fernere Partner als Punkt betrachtet und dies später durch Abziehen des Radius' der zweiten Kugel kompensiert wird.

6.  Verfahren nach Anspruch 4 oder 5,
    wobei die Abstandbestimmung in einer Schnittebene erfolgt, die durch die Ursprungsposition, den Mittelpunkt der ersten Kugel und den Mittelpunkt der zweiten Kugel festgelegt ist, und wobei insbesondere der Mittelpunkt der ersten Kugel und der Mittelpunkt der zweiten Kugel in die Schnittebene projiziert werden.

7.  Verfahren nach Anspruch 6,
    wobei in der Schnittebene eine Tangente von der Ursprungsposition an eine Projektion der ersten Kugel in die Schnittebene betrachtet wird.

8.  Verfahren nach Anspruch 7,
    wobei nur die Tangente betrachtet wird, die näher an dem Mittelpunkt der zweiten Kugel liegt.

9.  Verfahren nach Anspruch 7 oder 8,
    wobei anhand des Lots vom Mittelpunkt der zweiten Kugel auf die Tangente unterschieden wird, ob der kürzeste Abstand zu der ersten Kugel oder zu deren projektivem Schatten (32, 34) vorliegt.

10. Verfahren nach einem der vorhergehenden Ansprüche,
    wobei der Abstand für alle Paare von Maschinenteilen und Objekten (28) und der kürzeste Abstand als das Minimum dieser Abstände bestimmt wird.

**11.** Verfahren nach einem der vorhergehenden Ansprüche,
wobei mindestens eine der folgenden Größen bestimmt wird: n Paare von Maschinenteilen und Objekten (28) mit kürzestem Abstand, m nächste Objekte (28) zu einem Maschinenteil oder umgekehrt Maschinenteile zu einem Objekt (28), die 3D-Positionen, zwischen denen die Abstände bestehen, weitere Objektdaten eines Objekts (28) mit kürzestem Abstand, insbesondere dessen Position, Geschwindigkeit und/oder Kontur.

**12.** Verfahren nach einem der vorhergehenden Ansprüche,
wobei eine Absicherung der Maschine (26) erfolgt, wenn ein ermittelter Abstand einen Sicherheitsabstand unterschreitet.

**13.** Verfahren nach einem der vorhergehenden Ansprüche,
wobei 3D-Bilddaten aus mindestens zwei Ursprungspositionen bestimmt werden, und wobei in überlappenden Bereichen Abstände mit den unterschiedlichen projektiven Schatten (32, 34) zunächst separat bestimmt und anschließend ein gemeinsamer kürzester Abstand gefunden wird.

**14.** 3D-Sensor (10), insbesondere 3D-Kamera, zur Überwachung einer Maschine (26), mit einem Sensorkopf (14a, 14b) zur Erfassung von 3D-Bilddaten einer Umgebung der Maschine (26) sowie mit einer Auswertungseinheit (24), welche dafür ausgebildet ist, die 3D-Bilddaten mit einem Verfahren nach einem der vorhergehenden Ansprüche auszuwerten und so einen Abstand zwischen der Maschine (26) und Objekten (28) in einer Umgebung (12) der Maschine (26) zu ermitteln.

**Claims**

**1.** A method for monitoring a machine (26), wherein the positions of machine parts are detected, 3D image data of a neighborhood (12) of the machine (26) are acquired from an origin position and the positions of objects (28) are determined from the 3D image data, wherein a distance between the machine (26) and objects (28) in the neighborhood (12) of the machine (26) is determined by calculating the distance between respective pairs of a position of a machine part and a position of an object (28), and wherein the projective shadow (32, 34) of the object (28) is added to the machine part and/or the object (28) for the distance determination,
**characterized in that**, for the distance determination, the projective shadow (34) is added only to the object (28) if the object (28) is located closer to the origin position than the machine part, and conversely the projective shadow (32) is added only to the machine part if the machine part is located closer to the origin position.

**2.** The method according to claim 1,
wherein the positions of machine parts are determined in the form of at least one sphere covering the machine (26) and/or wherein the objects (28) are modeled as spheres with the center point at the position of the object (28) and the radius corresponding to a minimum size.

**3.** The method according to claim 1 or 2,
wherein the projective shadow (32, 34) is modeled as a cone.

**4.** The method according to one of the preceding claims,
wherein, for the distance determination, the respective closer partner of a pair of machine part and object (28) is modelled in the form of a first sphere together with a cone for the projective shadow (32, 34) and the more distant partner as a second sphere.

**5.** The method according to claim 4,
wherein during the distance determination at first the more distant partner is regarded as a point and this is later compensated by subtracting the radius of the second sphere.

**6.** The method according to claim 4 or 5,
wherein the distance is determined in a sectional plane defined by the origin position, the center of the first sphere and the center of the second sphere, and wherein in particular the center of the first sphere and the center of the second sphere are projected into the sectional plane.

**7.** The method according to claim 6,
wherein in the sectional plane a tangent from the origin position to a projection of the first sphere into the sectional plane is considered.

**8.** The method according to claim 7,
where only the tangent closer to the center of the second sphere is considered.

**9.** The method according to claim 7 or 8,
wherein an orthogonal line from the center of the second sphere to the tangent is used to distinguish whether the shortest distance is the distance to the first sphere or the distance to its projective shadow (32, 34).

**10.** The method according to one of the preceding claims,
wherein the distance is determined for all pairs of machine parts and objects (28) and the shortest distance is determined as the minimum of said distances.

**11.** The method according to one of the preceding claims,
wherein at least one of the following variables is determined: n pairs of machine parts and objects (28) having the shortest distance, m objects (28) closest to a machine part or vice versa machine parts to an object (28), the 3D positions associated with the distances, further object data of an object (28) having the shortest distance, in particular its position, speed and/or contour.

**12.** The method according to one of the preceding claims,
the machine (26) being secured when a determined distance falls below a safety distance.

**13.** The method according to one of the preceding claims,
wherein 3D image data are determined from at least two origin positions, and wherein in overlapping regions distances with the different projective shadows (32, 34) are at first determined separately and then a common shortest distance is determined.

**14.** A 3D sensor (10), in particular 3D camera, for monitoring a machine (26), having a sensor head (14a, 14b) for acquiring 3D image data of a neighborhood of the machine (26) and having an evaluation unit (24) which is configured to evaluate the 3D image data using a method according to one of the preceding claims and thus to determine a distance between the machine (26) and objects (28) in a neighborhood (12) of the machine (26).

## Revendications

**1.** Procédé de surveillance d'une machine (26), dans lequel les positions de pièces de machine sont détectées, des données d'image 3D d'un voisinage (12) de la machine (26) sont acquises à partir d'une position d'origine et les positions des objets (28) sont déterminées à partir des données d'image 3D, une distance entre la machine (26) et les objets (28) du voisinage (12) de la machine (26) étant déterminée en calculant la distance entre des paires respectives de positions de la pièce et d'un objet (28), et dans laquelle l'ombre projective (32, 34) de l'objet (28) est ajoutée à la partie de machine et/ou à l'objet (28) pour la détermination de la distance,
**caractérisé en ce que**, pour la détermination de la distance, l'ombre projective (34) est ajoutée uniquement à l'objet (28) si l'objet (28) est situé plus près de la position de départ que la partie de machine, et inversement l'ombre projective (32) est ajoutée seulement à la partie de machine si l'objet est située plus proche de la position de départ.

**2.** Procédé selon la revendication 1,
dans laquelle les positions des parties de machine sont déterminées sous la forme d'au moins une sphère recouvrant la machine (26) et/ou dans laquelle les objets (28) sont modélés en tant que sphères avec le point central à la position de l'objet (28) et le rayon correspondant à une taille minimale.

**3.** Procédé selon la revendication 1 ou 2,
dans laquelle l'ombre projective (32, 34) est modélée comme un cône.

**4.** Procédé selon l'une des revendications précédentes,
dans laquelle, pour la détermination de la distance, le partenaire le plus proche respectif d'une paire d'une pièce de machine et d'un objet (28) est modélé sous la forme d'une première sphère avec un cône pour l'ombre projective (32, 34) et le partenaire le plus éloigné comme seconde sphère.

5. Procédé selon la revendication 4,
   dans laquelle, pendant la détermination de la distance, le partenaire le plus éloigné est d'abord considéré comme un point, puis compensé en soustrayant le rayon de la seconde sphère.

6. Procédé selon la revendication 4 ou 5,
   dans laquelle la distance est déterminée dans un plan en coupe défini par la position d'origine, le centre de la première sphère et le centre de la seconde sphère, et en particulier le centre de la première sphère et le centre de la seconde sphère sont projetés dans le plan en coupe.

7. Procédé selon la revendication 6,
   dans lequel, dans le plan en coupe, une tangente de la position d'origine à une projection de la première sphère dans le plan en coupe est considérée.

8. Procédé selon la revendication 7,
   dans laquelle seule la tangente la plus proche du centre de la seconde sphère est considérée.

9. Procédé selon la revendication 7 ou 8,
   dans laquelle une ligne orthogonale du centre de la deuxième sphère à la tangente est utilisée pour distinguer si la distance la plus courte est la distance à la première sphère ou la distance à son ombre projective (32, 34).

10. Procédé selon l'une des revendications précédentes,
    dans laquelle la distance est déterminée pour toutes les paires de pièces de machine et d'objets (28) et la distance la plus courte est déterminée comme étant le minimum desdites distances.

11. Procédé selon l'une des revendications précédentes,
    dans laquelle au moins l'une des variables suivantes est déterminée : n paires de parties de machine et d'objets (28) ayant la distance la plus courte, m objets (28) les plus proches d'une partie de machine ou vice versa des parties de machine à un objet (28), les positions 3D associées aux distances, les autres données objet d'un objet (28) ayant la plus courte distance, en particulier sa position, vitesse et/ou contour.

12. Procédé selon l'une des revendications précédentes,
    dans laquelle la machine (26) étant sécurisée lorsqu'une distance déterminée tombe en dessous d'une distance de sécurité.

13. Procédé selon l'une des revendications précédentes,
    dans lequel des données d'image 3D sont déterminées à partir d'au moins deux positions d'origine, et dans lequel, dans des zones de chevauchement, des distances avec les différentes ombres projectives (32, 34) sont d'abord déterminées séparément et ensuite une distance commune la plus courte est déterminée.

14. Capteur 3D (10), en particulier caméra 3D, pour surveiller une machine (26), comportant une tête de capteur (14a, 14b) pour acquérir des données d'image 3D d'un voisinage de la machine (26) et comportant une unité d'évaluation (24) qui est configurée pour évaluer les données d'image 3D selon un procédé selon une des revendications précédentes et pour déterminer ainsi une distance entre la machine (26) et les objets (28) dans un voisinage (12) de la machine (26).

Figur 1

Figur 2

Figur 3

| S1 |
|---|
| Kugelmodell der Maschine |

| S2 |
|---|
| 3D-Erfassung der Umgebung der Maschine |

| S3 |
|---|
| Objekte in 3D-Bilddaten erkennen |

| S4 |
|---|
| Kugelmodell erfasster Objekte einer Mindestgröße |

| S5 |
|---|
| Bestimmte Abstand Maschine – Objekt für alle Paare von Maschinen- und Objektkugeln |

| S6 |
|---|
| Bestimme kürzesten Abstand und ggf. weitere Ausgabegrößen |

## Figur 4

S11 — Wähle ein Paar Kugeln für Maschinenteil beziehungsweise Objekt

S12 — Welcher der Partner des Paares ist weiter weg?

S13 — Fernerer Partner als Kugel (bzw. Punkt), näherer Partner als Kegel mit projektivem Schatten

S14 — Schnittebene durch Ursprungsposition der 3D-Erfassung und Mittelpunkte der Kugeln

S15 — Betrachte Tangente durch Ursprungsposition an Projektion der näheren Kugel (Kreis in Schnittebene)

S16 — Liegt Fußpunkt eines Lots vom Mittelpunkt der ferneren Kugel auf die Tangente im Bereich des Schattens?

S17a — nein — Bilde Abstand zum Fußpunkt auf die Tangente

S17b — ja — Bilde Abstand der Mittelpunkte minus Radien

Abstand des Paares

## Figur 5

## Figur 6

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 2819109 A1
- WO 2010085944 A1
- EP 2947604 A1

### In der Beschreibung aufgeführte Nicht-Patentliteratur

- A depth space approach to human-robot collision avoidance. **FLACCO ; FABRIZIO et al.** Robotics and Automation (ICRA), 2012 IEEE International Conference on. IEEE, 2012
- Real-time swept volume and distance computation for self collision detection. **TÄUBIG ; HOLGER ; BERTHOLD BÄUML ; UDO FRESE.** Intelligent Robots and Systems (IROS), 2011 IEEE/RSJ International Conference on. IEEE, 2011
- **LENZ ; CLAUS et al.** Fusing multiple kinects to survey shared human-robot-workspaces. Technische Universität München, 2012
- **MISEIKIS ; JUSTINAS et al.** Multi 3D Camera Mapping for Predictive and Reflexive Robot Manipulator Trajectory Estimation. *arXiv preprint arXiv:1610.03646,* 2016
- **ZUBE ; ANGELIKA.** Combined workspace monitoring and collision avoidance for mobile manipulators. *IEEE 20th Conference on Emerging Technologies & Factory Automation (ETFA),* 2015